# EUROPÄISCHE PATENTANMELDUNG

(11) **EP 0 589 367 A1**
(43) Veröffentlichungstag der Anmeldung: **30.03.1994**
(21) Anmeldenummer: 93115003.1
(22) Anmeldetag: 17.09.1993
(51) Int. Cl.: B09B 3/00, B27N 3/28, F26B 7/00, C10L 5/48, C08J 11/06, C02F 11/00, C02F 11/12, C08K 11/00

(54) **Verfahren und Vorrichtung zum Entsorgen von Abfallstoffen sowie Extrusions- oder Formteil**

(30) Priorität: 23.09.1992 DE 4231793; 12.12.1992 DE 4241977
(71) Anmelder: Bolz, Alfred, D-88227 Wangen (DE)
(72) Erfinder: Bolz, Alfred, D-88227 Wangen (DE)
(74) Vertreter: Knoblauch, Andreas, Dr.-Ing.

(57) **Zusammenfassung**

Bei einem Verfahren und einer Vorrichtung zum Entsorgen von Abfallstoffen wird getrockneter Klärschlamm in einem Konverter (42) durch Beheizung zu Pulver weiterbehandelt. Getrocknete Kunststoffabfälle werden getrocknet und anschließend in einer Schmelzvorrichtung (58) zu einer fließbaren Masse umgesetzt. Pulver und fließbare Masse werden gemischt und anschließend in einer Formungsvorrichtung (D) zu Formkörpern gebildet.

## Beschreibung

Die Erfindung bezieht sich auf ein Verfahren und eine Vorrichtung zum Entsorgen von Abfallstoffen sowie ein Extrusions- oder Formteil.

Bislang war es sehr schwierig, bestimmte Abfallstoffe, wie Klärschlamm oder Kunststoffteile, zu entsorgen. Sie werden zumeist in einer Deponie endgelagert, wobei der Klärschlamm zweckmäßigerweise getrocknet worden ist und als Granulat vorliegt. Wenn die Deponie aber nicht abgedeckt ist, kann sich das Granulat bei Regen wieder zu Schlamm umformen.

Der Erfindung liegt die Aufgabe zugrunde, Abfallstoffe zu entsorgen, ohne daß eine Ablagerung in einer Deponie erforderlich ist.

Diese Aufgabe wird verfahrensmäßig durch die Merkmale des Anspruchs 1 und vorrichtungsmäßig durch die Merkmale des Anspruchs 14 gelöst.

Der Abfallstoff "Klärschlamm" wird durch Trocknung und Konvertierung zu einem Pulver umgesetzt, das aus Mineralien verschiedener Art und/oder Kohle besteht und daher gegen Feuchtigkeitsaufnahme weitgehend unempfindlich ist. Die Körnung des Pulvers hängt von der Zusammensetzung des Klärschlamms und den Behandlungsparametern ab. In der Praxis liegt die Korngröße zumeist unter 0,5 mm. Der Abfallstoff "Kunststoff" kann durch entsprechende Beheizung in eine fließbare Masse umgesetzt werden. Dies gilt zumindest für alle Thermoplaste, die den überwiegenden Teil des Kunststoff-Mülls ausmachen, wie Becher, Geschirr, Eimer, Verpackungshilfen, Tragetaschen, Waschmittelflaschen, Schutzfolien u.dgl. aus Kunststoff. Wenn anschließend das Pulver und die fließbare Masse miteinander gemischt werden, ergibt sich eine formbare Masse, bei der die Teilchen des Klärschlamm-Pulvers ringsum vom Kunststoff umschlossen sind, also einen zusätzlichen Schutz gegen Feuchtigkeitsaufnahme erhalten, und andererseits einen Zuschlagsstoff für die Kunststoffmasse bilden. Nach Abkühlung ergibt sich wegen dieses Zuschlagsstoffes ein außerordentlich fester Körper. Durch die Formung des Gemisches erhält man für die Praxis brauchbare Gegenstände, wie Steine für Straßen- und Hofbelag, Hohlkörper aller Art, wie Hohlblocksteine für Fundamententwässerung, Dachplatten, Poller für Straßenbegrenzung, Entwässerungsleitungen, Fliesen für Naßbetriebe u.dgl.

Insgesamt sind daher Klärschlamm und Kunststoff endgültig in einer Weise versorgt, die eine Deponie-Ablagerung überflüssig macht. Die entstehenden Formkörper sind geruchlos. Sie erfordern keine Rohstoffbeschaffung und können als Ersatz für Zementsteine o.dgl. verwendet werden, für die bisher Naturstoffe in Anspruch genommen werden mußten.

Der Ausdruck "Klärschlamm" steht hier für alle Abfallschlämme, die in analoger Weise entsorgt werden können.

Besonders günstig ist es nach den Ansprüchen 2 und 15, eine Trocknung unter Vakuum durchzuführen. Der hierbei angewendete Unterdruck führt zu einem raschen Verdampfen des Wassers und daher zu einer schnellen Trocknung.

Gemäß Anspruch 3 empfiehlt es sich, die Temperatur des Pulvers beim Mischvorgang niedriger zu wählen als die Temperatur der fließbaren Masse. Insbesondere kann das Pulver kalt beigemischt werden. Hierdurch kann eine Kühlung des Gemischs ganz oder teilweise entfallen.

Gemäß Anspruch 4 empfiehlt es sich, daß das Pulver mindestens 30 %, vorzugsweise 40 bis 50 %, des Gemischvolumens beträgt. Dies ergibt einen besonders stabilen Formkörper.

Die im Anspruch 5 angegebenen Temperaturen sind vorteilhaft, weil sie gewährleisten, daß aus dem Klärschlamm-Granulat in kurzer Zeit alle flüchtigen und die Aufnahme von Feuchtigkeit begünstigenden Bestandteile ausgetrieben werden.

Die Temperaturangaben des Anspruchs 6 haben zur Folge, daß der Kunststoff nicht nur eine ausreichende Fließbarkeit zur Vermischung mit dem Pulver erhält, sondern - insbesondere bei höheren Temperaturen - auch alle flüchtigen Bestandteile verliert, wodurch sich im erkalteten Zustand eine noch höhere Festigkeit ergibt. Des weiteren besteht die Möglichkeit, auf das Aussortieren von nicht-thermoplastischen Kunststoffen zu verzichten, weil andere Kunststoffe, die sich bei diesen Temperaturen zersetzen, in der fließbaren Masse nur noch einen untergeordneten Einfluß haben.

Besonders günstig ist die Zerkleinerung oder Häckselung nach Anspruch 7. Zum einen werden die Kunststoffhäcksel bei Beheizung rasch geschmolzen. Zum andern werden nichtschmelzbare Kunststoffe so fein verteilt, daß ihre Reste, gegebenenfalls nach Teilzersetzung, im fertigen Formkörper keinen nachteiligen Einfluß ausüben.

Wenn gemäß Anspruch 8 das Pulver der Kunststoffmasse im Schmelzbehälter beigemischt wird, kann dem Kunststoff eine hohe Temperatur und damit eine gute Fließbarkeit im Mischzeitpunkt gegeben werden. Die Pulverkörner werden vollständig vom Kunststoff umschlossen, auch wenn ein verhältnismäßig großer Prozentsatz an Pulver zugemischt wird.

Durch die Beaufschlagung mit Stickstoff oder dergleichen gemäß Anspruch 9 und daher durch den Ausschluß von Sauerstoff kann man unerwünschten Reaktionen, insbesondere einer Explosionsgefahr, vorbeugen.

Wenn gemäß Ansprüchen 10 und 11 das Konvertieren des Klärschlamms und/oder des Fließbarmachens der Masse im wesentlichen unter Vakuum und daher weitgehend unter Ausschluß von Sauerstoff erfolgt, erzielt man ein im wesentlichen blasenfreies Produkt, das eine hohe Festigkeit hat.

Es hat sich gezeigt, daß dem Gemisch mindestens noch ein weiterer Abfallstoff gemäß Anspruch 12 beigemischt werden kann. Auf diese Weise wird auch dieser weitere Abfallstoff entsorgt. Darüber hinaus kann er dazu beitragen, gewünschte Eigenschaften des aus dem Gemisch herzustellenden Formteils zu erzielen.

Insbesondere kommt Gips gemäß Anspruch 13 als weiterer Abfallstoff in Betracht. Rohgips fällt in Kraftwerken durch die Entschwefelung in großen Mengen an und muß entsorgt werden. Gleichzeitig können die Härteeigenschaften des Formstücks durch Gips beeinflußt werden.

Konstruktiv empfiehlt sich eine Kunststoff-Trocknungsvorrichtung nach Anspruch 16. Da der Kunststoff in der Regel nur von außen getrocknet werden muß, genügt ein Kanal, der von heißer Trocknungsluft durchsetzt wird.

Die der Zerkleinerungsvorrichtung nachgeschaltete Förderschnecke des Anspruchs 17 führt zu einer zwangsweisen Zufuhr der Häcksel in die Schmelzvorrichtung, wobei die von der Trocknung herrührende Temperatur weitgehend erhalten bleibt.

Bei der Weiterbildung nach Anspruch 18 ist die Mischvorrichtung mit den Ausgängen für das Pulver und die fließbare Masse verbunden. Dies bedeutet, daß die Anlagen für die Klärschlammbehandlung und für die Kunststoffbehandlung räumlich benachbart angeordnet sind. Das Pulver kann in noch heißem Zustand der Mischvorrichtung Zugeführt werden.

Günstig ist die Ausgestaltung nach Anspruch 19, weil lediglich das Pulver über eine gewisse Entfernung transportiert werden muß und der fließbaren Masse unmittelbar am Ausgang der Schmelzvorrichtung zugeführt werden kann.

Die Zusammenfassung von Mischvorrichtung und Schmelzvorrichtung gemäß Anspruch 20 bringt den Vorteil, daß auf ein gesondertes Gehäuse für die Mischvorrichtung verzichtet werden kann und sich hierdurch bauliche Vereinfachungen ergeben.

Bei der Weiterbildung gemäß Anspruch 21 ist zur Bildung der Mischvorrichtung in der Schmelzvorrichtung ein Rührwerk vorgesehen.

Günstig ist der weitere Eingang gemäß Anspruch 22. Über ihn kann ein weiterer Abfallstoff, wie Gips, in das Gemisch eingebracht werden.

Wenn die Mischvorrichtung gemäß Anspruch 23 unmittelbar über der Formungsvorrichtung angeordnet ist, ergibt sich ein kurzer Weg für die plastische Masse bis zur Formungsmaschine. Insbesondere kann man eine Spritzgußmaschine anwenden, und mit einer hohen Verdichtung von beispielsweise 60 bar arbeiten. Dies gilt insbesondere, wenn die Mischvorrichtung in die Schmelzvorrichtung integriert ist und deren Ausgang unmittelbar mit der Formungsvorrichtung verbunden ist.

Die Inertgas-Anlage gemäß Anspruch 24 erleichtert das Entleeren des Schmelzbehälters, weil unerwünschte Reaktionen vermieden werden.

Die Vakuumanlage für den Konverter und/oder die Schmelzvorrichtung gemäß Ansprüchen 25 und 26 helfen dabei, wenn unter Ausschluß von Sauerstoff gearbeitet werden soll.

Ein der Schmelzvorrichtung vorgeschalteter Pufferbehälter für Kunststoffschnitzel gemäß Anspruch 27 und ein der Mischvorrichtung vorgeschalteter Pufferbehälter für Pulver gemäß Anspruch 28 erlauben eine bessere Anpassung der Betriebsweise von Schmelz- und Mischvorrichtung an die angelieferten Abfallprodukte.

Die Vorrichtung erfüllt ihren Zweck auch, wenn gemäß Anspruch 29 der Pufferbehälter für Pulver anstelle des Konverters vorgesehen ist. Der Pufferbehälter wird dann mit Pulver gefüllt, das von einer entfernt liegenden Klärschlamm-Aufbereitungsanlage geliefert wird.

Die Formungsvorrichtung kann gemäß Anspruch 30 einen Extruder und gemäß Anspruch 31 eine Gießform aufweisen. Auch andere Formungsvorrichtungen kommen in Betracht.

Geschützt ist auch ein Extrusions- oder Formteil nach Anspruch 32, das im wesentlichen aus einem Gemisch von Abfallstoffen besteht, darunter Kunststoff und aus Klärschlamm gewonnenes Pulver.

Die Erfindung wird nachstehend anhand in der Zeichnung dargestellter bevorzugter Ausführungsbeispiels näher erläutert. Es zeigen:
- Fig. 1: den schematischen Aufbau einer erfindungsgemäßen Entsorgungsvorrichtung,
- Fig. 2: eine Klärschlamm-Trocknungsanlage,
- Fig. 3: eine Anlage zum Konvertieren von getrocknetem Klärschlamm und zum Trocknen und Schmelzen von Kunststoff, und
- Fig. 4: eine zugehörige Heizanlage.

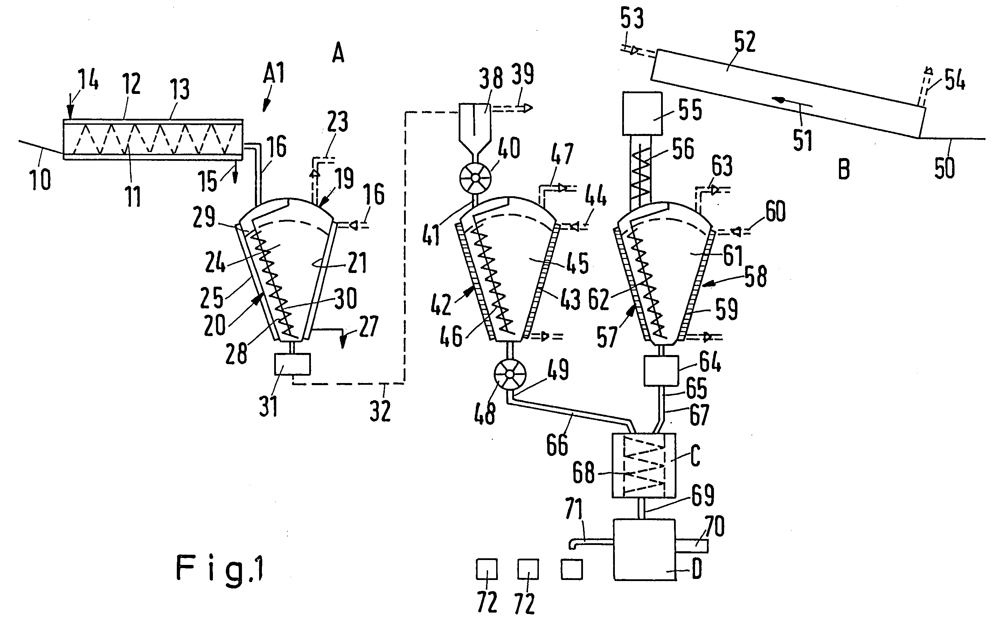

Die in Fig. 1 veranschaulichte Entsorgungsvorrichtung weist eine Klärschlamm-Behandlungsvorrichtung A, eine Kunststoffbehandlungsvorrichtung B, eine Mischvorrichtung C und eine Formungsvorrichtung D auf.

In der Klärschlamm-Behandlungsvorrichtung A wird Naßschlamm mit nicht mehr als 65 % Restfeuchte einer Aufgabestelle 10 zugeführt. Er wird von einer Schnecke 11 durch ein Rohr 12 transportiert und dabei vorgewärmt. Dies geschieht mit Hilfe eines Heizmantels 13, der mit einer Zuflußleitung 14 für Warmwasser und mit einer Rücklaufleitung 15 für abgekühltes Wasser versehen ist.

Das Rohr 12 ist über eine Leitung 16 mit einem Trockner 19 verbunden. Dieser besitzt einen Behälter 20, von dessen Innenraum 21 eine Absaugleitung 23 zu einer Vakuumpumpe abgeht. Der Innenraum kann daher unter Unterdruck gesetzt werden. Die Füllmenge 24 im Behälter 20 wird durch eine Heizvorrichtung 25 in der Form eines Heizmantels beheizt, der oben eine Dampfzuleitung 26 und unten eine Kondensatableitung 27 besitzt. Ferner ist eine Mischvorrichtung 28 in Form einer Schnecke 29 vorgesehen, die nahe der Konuswand des Behälters 20 angeordnet ist und um ihre Achse 30 umläuft. Die Achse 30 ist ihrerseits um die Mittelachse des Auffangbehälters 20 drehbar. Durch diese permanent kreisende Mischbewegung des zu trocknenden Materials erfolgt außer der durch Vakuum unterstützbaren Trocknung noch eine gleichmäßige kugelige Verformung des Materials zu einem Granulat mit glatter, fester Oberfläche und einer Korngröße von etwa 2 mm bis 3 mm.

Dieses Granulat wird über eine Feststoffschleuse 31, beispielsweise in Form einer Zellenradschleuse, chargenweise oder kontinuierlich über einen nur angedeuteten Pfad 32 einem Abscheider 38, vorzugsweise einem Zyklonabscheider, zugeführt, der die Feststoffe, auch den Staub, von den über eine Leitung 39 abzuführenden Gasen trennt. Die vom Klärschlamm durchsetzten Bauelemente vor dem Abscheider 38 bilden daher eine Klärschlamm-Trocknungsvorrichtung A1.

Der Feststoffausgang des Abscheiders 38 ist über eine Schleuse 40 in Form einer Zellenradschleuse mit dem Eingang 41 eines Konverters 42 verbunden, in welchem das chemisch gebundene Wasser und alle anderen flüchtigen Bestandteile ausgetrieben und die etwa verbleibenden organischen Bestandteile in Kohle umgewandelt werden. Zu diesem Zweck ist der Konverter 42 mit einer spiralförmig um den Behälter herumgeführten Heizvorrichtung 43 in Form eines Heißgaskanals versehen, dem über eine Leitung 44 heiße Verbrennungsgase derart zugeführt werden, daß sich das Füllgut 45 im Innern des Konverters auf mindestens 200°C, vorzugsweise 380° bis 400°C, erwärmt. Außerdem ist eine Mischvorrichtung 46 vorgesehen, die derjenigen des Trockners 19 entspricht. Wasserdampf und gasförmige Reaktionsprodukte werden über eine Leitung 47 abgesaugt. Das so getrocknete und konvertierte Material ist pulverförmig und wird über eine Schleuse 48 in Form einer Zellenradschleuse einem Ausgang 49 für das Pulver zugeführt. Die Zusammensetzung des Pulvers richtet sich nach dem Bereich, aus welchem der Klärschlamm anfällt. In städtischen Bereichen überwiegt der Anteil an Mineralien, der sich von Straßen, Marktplätzen u.dgl. ergibt. Kohle ist beispielsweise mit weniger als 30 % vertreten.

Die Kunststoff-Behandlungsvorrichtung B weist eine Aufgabestelle 50 auf, die mit Kunststoffteilen beschickt wird. Ein nur angedeuteter Förderer 51, beispielsweise wie bei einem Ladewagen in der Landwirtschaft, fördert den Kunststoff durch eine Trocknungsvorrichtung 52 in der Form eines Kanals, durch den heiße Luft geblasen wird, welche über eine Leitung 53 zugeführt und über eine Leitung 54 abgeführt wird. Auf diese Weise wird die Oberfläche des Kunststoffs getrocknet.

Anschließend fällt der Kunststoff in eine Zerkleinerungsvorrichtung 55, beispielsweise eine Häckselvorrichtung. Die nunmehr kleinen Kunststoffteile werden mittels einer Förderschnecke 56 zusammengepreßt und in den Behälter 57 einer Schmelzvorrichtung 58 transportiert. Diese weist wiederum eine Heizvorrichtung 59 in Form eines spiralförmig um den Behälter herumgeführten Heißgaskanals auf, dem über eine Zuleitung 60 Verbrennungsgase zugeführt werden. Der Behälterinhalt 61 wird hierdurch auf eine Temperatur von mindestens 250°C, erwärmt. Wiederum gibt es eine Mischvorrichtung 62, die ähnlich aufgebaut sein kann wie bei dem Vakuumtrockner 19 und dem Konverter 42.

Eine Temperatur von 270°C empfiehlt sich, wenn der thermoplastische Kunststoff plastisch und fließbar gemacht werden soll, ohne daß flüchtige Bestandteile in erheblichem Maße ausgetrieben werden. Bei einer höheren Temperatur von beispielsweise 500° bis 600°C jedoch werden die flüchtigen Bestandteile weitgehend aus dem Kunststoff entfernt; sie können über eine Leitung 63 abgesaugt werden. Diese fließbare Masse kann an einem Ausgang 65 der unten angeordneten Schleuse 64, beispielsweise in der Form eines Zellenrades oder einer Schnecke, abgenommen werden.

Der Ausgang 49 für das Klärschlamm-Pulver und der Ausgang 65 für die fließbare Masse sind über Leitungen 66 und 67 mit der Mischvorrichtung C verbunden. Diese vermischt das Pulver mit der fließbaren Masse derart, daß eine gleichmäßige Verteilung vorhanden ist. Beispielsweise erfolgt das Mischen mittels einer feingängigen Förderschnecke 68, der nahe dem einen Ende fließbarer Kunststoff und Pulver zugeführt wird, wobei das Gemisch am anderen Ende abgenommen wird. Im einfachsten Fall dient diese Förderschnecke gleichzeitig als Ausgangsschleuse für den Konverter 42 und/oder die Schmelzvorrichtung 58.

Schließlich gelangt das Gemisch über eine Leitung 69 in die Formungsvorrichtung D. Bei ihr ist schematisch ein Extruder 70 und eine Gießttülle 71 zum Füllen von Gießformen 72 veranschaulicht.

Nach Abkühlung ergeben sich Strangprofile bzw. Formkörper, die aus erstarrtem Kunststoff mit einem Zuschlag aus Klärschlamm-Pulver bestehen, wobei das Pulver einen Anteil von mindestens 30 %, vorzugsweise bis 50 %, des gesamten Volumens betragen kann. Falls die Kunststoffteile nicht vorsortiert waren und daher auch nichtschmelzbare Kunststoffsorten enthielten, kann das Gemisch noch gehäckselte Teile dieses Kunststoffes aufweisen, was für die meisten Anwendungszwecke der so gebildeten Formkörper zulässig ist. Die auf diese Weise gebildeten Formkörper haben eine glatte Oberfläche, können aber durch Aufrauhen auch rutschfest gemacht werden.

Günstig ist es, daß die Bestandteile des Gemisches aufgrund ihrer vorangegangenen Behandlung eine hohe Temperatur haben und daher für das Mischen und Formen keiner zusätzlichen Beheizung bedürfen. Hierbei empfiehlt es sich, daß die Verbindung zwischen Schmelzvorrichtung 58 und Mischvorrichtung C kurz ist, während das Pulver auch über eine längere Leitung 66 transportiert werden kann. Das Gemisch hat infolge des Pulverzusatzes eine höhere Viskosität als der fließbare Kunststoff. Dies ist günstig, wenn beim anschließenden Formungsvorgang, zum Beispiel beim Strangpressen, kein fließfähiges, sondern nur ein plastisches Material gefordert ist. Wenn aber die Konsistenz des Gemischs für den Formungsvorgang nicht ausreicht, kann in der Formungsvorrichtung D noch eine Kühlvorrichtung oder eine Heizvorrichtung vorgesehen sein. Es besteht auch die Möglichkeit, das Klärschlammpulver nach Zwischenlagerung der Mischvorrichtung zuzuführen. Das kalte Pulver senkt die Gemischtemperatur um 30° bis 40°C, so daß eine gesonderte Kühlung vielfach entfallen kann.

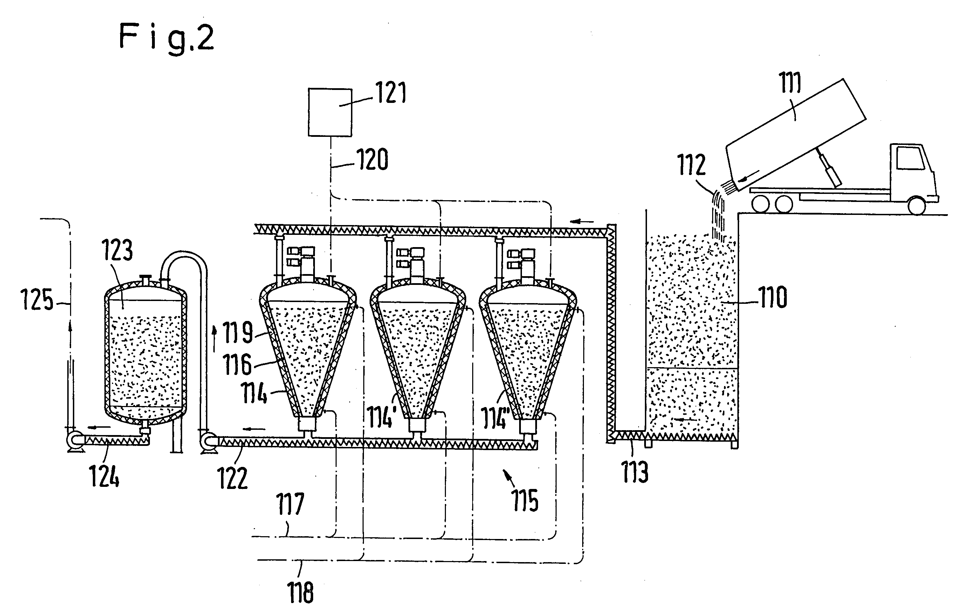

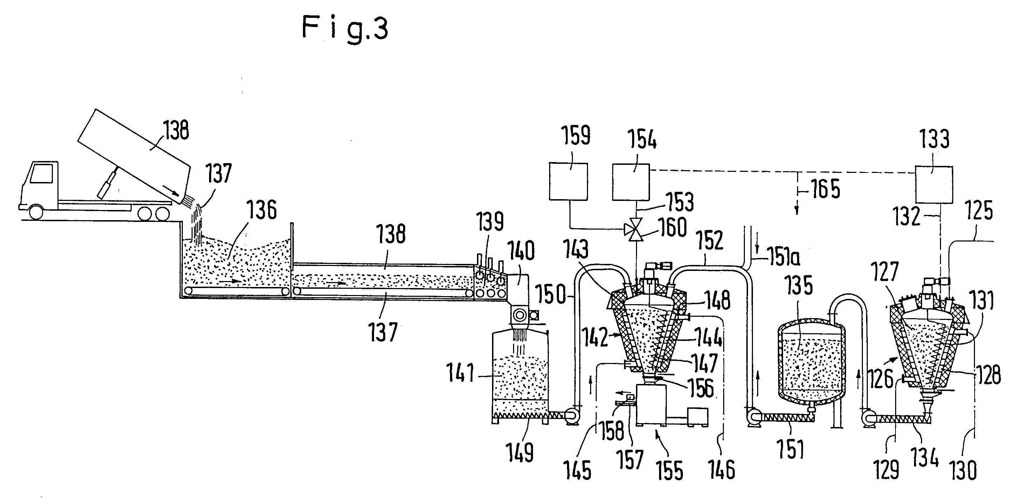

Bei der Ausführungsform der Fig. 2 bis 4 wird ein Aufgabebehälter 110 durch ein Lieferfahrzeug 111 mit Klärschlamm 112 versorgt, der schon über eine Filterkammerpresse gegangen ist und nur noch eine Restfeuchte von 65 % hat. Dieser Klärschlamm wird über einen Schneckenförderer 113 gleichmäßig auf drei Behälter 114, 114', 114'' einer Trocknungsvorrichtung 115 verteilt. Die Behälter besitzen je einen Heizmantel 116, der über eine Leitung 117 mit heißem Thermoöl versorgt wird, das über eine Leitung 118 abgeführt wird. Die Beheizung kann auch mit Heißwasser oder Dampf erfolgen. Der Heizmantel 116 ist von einer Wärmeisolierschicht 119 umgeben. Die Behälter sind über ein Absaugleitung 120 mit einer Vakuumanlage 121 verbunden. Daher wird dem Klärschlamm intensiv Feuchtigkeit entzogen.

Die Trocknung kann durch eine Mischvorrichtung unterstützt werden, die der Mischvorrichtung 28 im Hauptpatent entspricht. Das so gebildete Granulat wird über einen Förderer 122 in einen Pufferbehälter 123 geleitet und kann mit dessen Ausgangsförderer 124 über einen Lieferpfad 125 weitergeleitet werden. Der Ausgangsförderer ist als Schnecke dargestellt; er kann aber auch auf andere Weise, z.B. pneumatisch, arbeiten.

Der Lieferpfad besteht aus einer festen Rohrverbindung, kann aber auch durch einen Transport mit Lieferfahrzeugen gebildet sein. Dies gilt insbesondere für den Fall, daß sich mehrere Gemeinden oder Anwender zusammenschließen.

Das getrocknete Granulat gelangt in einen Konverter 126. Dieser besteht aus einem konischen Behälter 127 mit einem Heizmantel 128, dem Heißgase über eine Leitung 129 zugeführt wird, während die Abgase über eine Leitung 130 abgeführt werden. Auch hier kann eine Mischvorrichtung 131 vorgesehen werden, die der Mischvorrichtung 46 des Hauptpatens entspricht. Die Oberseite des Behälters 127 ist über eine Absaugleitung 132 mit einer Vakuumanlage 133 verbunden. In diesem Konverter 126 werden aus dem getrockneten Granulat das darin enthaltene öl, chemisch gebundenes Wasser und alle anderen flüchtigen Bestandteile über Vakuum entzogen sowie die verbleibenden organischen Bestandteile in Kohle umgewandelt. Es entsteht ein Pulver, das mittels eines Förderers 134 in einen Pufferbehälter 135 geführt wird.

Für die Kunststoffbehandlung ist ein Aufgabebehälter 136 vorgesehen, dem Kunststoffabfälle 137 von einem Lieferfahrzeug 138 zugeführt werden. Diese Abfälle werden mit Hilfe eines Förderers 137 durch einen Vorwärmtunnel 138 transportiert, wo sie getrocknet werden. Es folgt eine Presse 139, mit der der Kunststoff zusammengedrückt wird, bevor er in eine Zerkleinerungsvorrichtung 140, beispielsweise einen Schredder gelangt. Die Kunststoffschnitzel werden in einem Kunststoff-Pufferbehälter 141 gesammelt.

Eine kombinierte Schmelz- und Mischvorrichtung 142 weist einen konischen Behälter 143 auf, der mit einem Heizmantel 144 versehen ist. Dieser wird über eine Leitung 145 mit Heißgasen beschickt. Über eine Leitung 146 werden die Abgase abgeführt. Außerdem ist eine Mischvorrichtung 147 vorgesehen, die der Mischvorrichtung 62 des Hauptpatents entspricht. Der Heizmantel 144 ist von einer Wärmeisolierschicht 148 umgeben.

In den Behälter 143 können von oben Kunststoffschnitzel, welche mittels einer Fördervorrichtung 149 über einen Rohrleitungs-Eingang 150 zugeführt werden, und das vom Klärschlamm verbliebene Pulver mittels einer Fördervorrichtung 151 über einen Rohrleitungs-Eingang 152 zugeführt werden. Durch einen Zufuhrkanal 151a kann bei Bedarf ein weiterer Abfallstoff, insbesondere Rohgips in Pulverform, mit dem von der Fördervorrichtung 151 zugeführten Klärschlamm-Pulver vermischt und über den Rohrleitungsleitungs-Eingang 152 dem Schmelzbehälter 143 zugeführt werden.

Zweckmäßigerweise wird zunächst der Kunststoff eingeführt und unter Luftabschluß geschmolzen. Hierbei noch entstehende Gase werden über eine Absaugleitung 153 zu einer Vakuumanlage 154 geleitet. Gegen Ende des Schmelzvorganges wird dann allmählich Pulver hinzugemischt, bis sich ein gleichmäßiges Gemisch ergeben hat. Dieser Pulverzusatz besteht allein aus dem aus Klärschlamm gewonnenen Pulver, das mittels der Fördervorrichtung 151 zugeführt wird, oder einem Gemisch aus diesem Pulver und einem weiteren Abfall-Pulver, insbesondere Rohgips, das über den Zuführkanal 151a zugeleitet wird. Während dieses Mischvorgangs kann die Vakuumanlage 154 abgeschaltet werden.

Unmittelbar unterhalb des Behälters 143 befindet sich eine Formenpresse 155, der nach Öffnen des mit einem Schieber versehenen Ausgangs 156 fließbares Gemisch zugeführt wird. Über einen Förderer 157 kann das Endprodukt 158, abgenommen werden. Die Kunststoffpresse kann mit einem Druck von beispielsweise 40 bis 60 bar betrieben werden.

Eine Stickstoff unter Druck enthaltende Anlage 159 kann mit Hilfe eines Umschaltventils 160 anstelle der Vakuumanlage 154 mit dem oberen Teil des Behälters 143 verbunden werden. Der Druck unterstützt das Austragen des Gemisches aus dem Behälter. Die inerte Eigenschaft verhindert unerwünschte Reaktionen. Insbesondere ist Sauerstoff ausgeschlossen und zwar während des Schmelzens und Mischens wegen der Vakuumanlage 154 und während der Entleerung des Behälters 143 wegen der Stickstoffanlage 159.

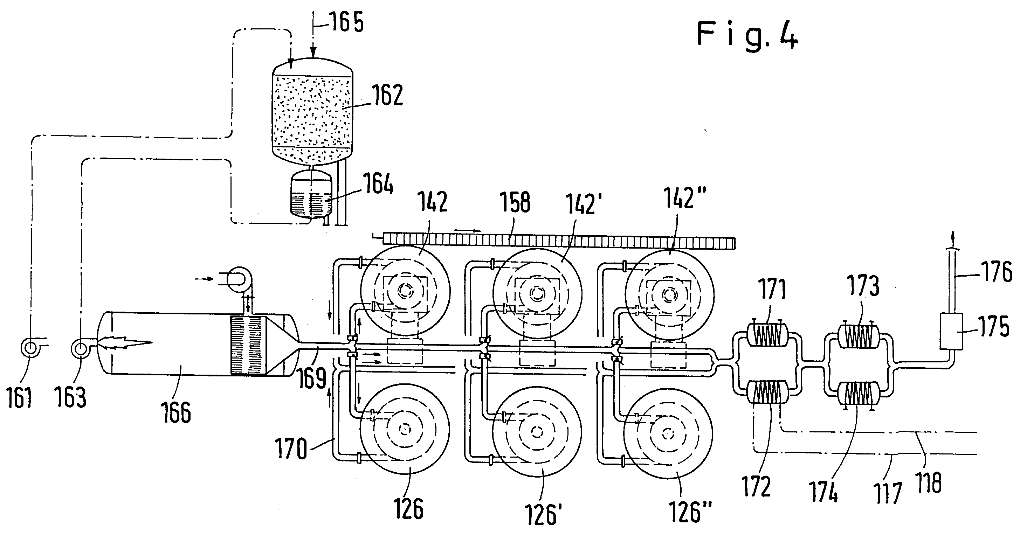

Die Heizanlage in Fig. 4 besitzt einen Gasbrenner 161, der aus einem Behälter 162 für brennbare Gase gespeist wird, und einen Ölbrenner 163, der von einem Ölbehälter 164 gespeist wird. Durch einen Pfeil 165 ist schematisch angedeutet, daß in diesen Behältern die brennbaren Bestandteile der flüchtigen Stoffe gesammelt werden, die in die Vakuumanlage 133 und 154 gelangen, wobei Kondensationsstufen u.dgl. nicht dargestellt sind. Ein weiterer, nicht dargestellter Brenner kann mit Kohlepulver gespeist werden, das dadurch gewonnen wird, daß man das vom Klärschlamm herrührende Pulver, das zu einem Teil aus Kohle und zum anderen Teil aus Mineralstoffen besteht, mittels eines Windsichters behandelt.

Die Brenner sind einem Heizkessel 166 zugeordnet, dessen Verbrennungsgase oder Heißgase über eine Leitung 169 zu drei Konvertern 126, 126', 126'' und drei kombinierten Schmelz- und Mischvorrichtungen 142, 142', 142'' gelangen. Die von diesen austretenden Heißgase gelangen über Rohrleitungen 170 zu vier weiteren Wärmetauschern, nämlich dem Wärmetauscher 171 für Dampf, dem Wärmetauscher 172 für Thermoöl, dem Wärmetauscher 173 für Warmwasser und dem Wärmetauscher 174 für vorzuwärmende Verbrennungsluft. Es folgt noch ein Rauchgasfilter 175 und ein Abluftkanal 176, in dem eine Nachverbrennung für unverbrauchte Gase vorgesehen sein kann.

Aus dieser Darstellung ist erkennbar, daß die Konverter 126 und die Schmelz- und Mischvorrichtung 142 ebenso wie die Trocknungsvorrichtungen 114 dreifach vorhanden sind. Mit üblichen Abmessungen läßt sich auf diese Weise eine Menge von 10 Tonnen Kunststoffschrott und 10 m³ Klärschlamm pro Stunde verarbeiten. Aus einem Kubikmeter Klärschlamm lassen sich etwa 10 l Öl gewinnen, die zur Aufrechterhaltung des Heizbetriebes ausreichen.

Weil die Schmelz- und Mischvorrichtung 142 unmittelbar oberhalb der Formungsvorrichtung angeordnet ist, hat das Gemisch eine hohe Fließfähigkeit. Es läßt sich daher ohne Schwierigkeiten mit einer Verdichtung von beispielsweise 60 bar im Spritzgußverfahren verarbeiten.

Auf die beschriebene Weise sind erfolgreich Formteile in der Form von Pflastersteinen hergestellt worden, die zu 40 bis 60 % aus Kunststoff, zu 30 bis 40 % aus Klärschlamm und zu 0 bis 20 % aus Gips bestehen. Beispiele sind: 60 % Kunststoff/40 % Klärschlamm oder 40 % Kunststoff/40 % Klärschlamm/20 % Gips oder 50 % Kunststoff/40 % Klärschlamm/10 % Gips oder 50 % Kunststoff/30 % Klärschlamm/20 % Gips. Hierbei kann man den Kunststoff als Binder, das Klärschlamm-Pulver als Füller und den Gips als Härter ansehen.

## Patentansprüche

1. Verfahren zum Entsorgen von Abfallstoffen, bei dem getrockneter Klärschlamm durch Beheizung derart konvertiert wird, daß die organischen Bestandteile ausgedampft oder in Kohle umgesetzt sind, wobei sich ein Pulver ergibt, bei dem getrocknete Kunststoffabfälle derart beheizt werden, daß sich eine fließbare Masse ergibt, bei dem das Pulver und die fließbare Masse miteinander gemischt werden und bei dem aus dem Gemisch ein Extrusions- oder Formteil gebildet wird.

2. Verfahren nach Anspruch 1, dadurch gekennzeichnet, daß zumindest ein Teil des Trocknungsvorgangs unter Vakuum erfolgt.

3. Verfahren nach Anspruch 1 oder 2, dadurch gekennzeichnet, daß die Temperatur des Pulvers beim Mischvorgang niedriger ist als die Temperatur der fließbaren Masse.

4. Verfahren nach einem der Ansprüche 1 bis 3, dadurch gekennzeichnet, daß das Pulver mindestens 30 %, vorzugsweise 40 bis 50 %, des Gemischvolumens beträgt.

5. Verfahren nach einem der Ansprüche 1 bis 4, dadurch gekennzeichnet, daß der getrocknete Klärschlamm auf 200° bis 600°C, vorzugsweise 400° bis 500°C beheizt wird.

6. Verfahren nach einem der Ansprüche 1 bis 5, dadurch gekennzeichnet, daß der getrocknete Kunststoff auf mindestens 250°C, vorzugsweise auf 500° bis 600°C, beheizt wird.

7. Verfahren nach einem der Ansprüche 1 bis 6, dadurch gekennzeichnet, daß die Kunststoffabfälle nach dem Trocknen zerkleinert werden.

8. Verfahren nach einem der Ansprüche 1 bis 7, dadurch gekennzeichnet, daß das Pulver der Kunststoffmasse beigemischt wird, während sich diese im Schmelzbehälter befindet.

9. Verfahren nach einem der Ansprüche 1 bis 8, dadurch gekennzeichnet, daß zumindest das Austragen der fließbaren Masse aus der Schmelzvorrichtung unter Beaufschlagung mit einem inerten Gas, wie Stickstoff, erfolgt.

10. Verfahren nach einem der Ansprüche 1 bis 9, dadurch gekennzeichnet, daß das Konvertieren des Klärschlamms im wesentlichen unter Vakuum erfolgt.

11. Verfahren nach einem der Ansprüche 1 bis 10, dadurch gekennzeichnet, daß das Fließbarmachen der Masse im wesentlichen unter Vakuum erfolgt.

12. Verfahren nach einem der Ansprüche 1 bis 11, dadurch gekennzeichnet, daß dem Gemisch mindestens ein weiterer Abfallstoff beigemischt ist.

13. Verfahren nach Anspruch 12, dadurch gekennzeichnet, daß der weitere Abfallstoff Gips ist.

14. Vorrichtung zum Entsorgen von Abfallstoffen, mit einem Konverter (42; 126), der aus beheiztem, getrocknetem Klärschlamm ein Pulver erzeugt, mit einer beheizbaren Schmelzvorrichtung (58; 142), die aus getrocknetem Kunststoff eine fließbare Masse erzeugt, mit einer Mischvorrichtung (C; 142) zur Erzeugung eines Gemisches aus fließbarer Masse und Pulver und mit einer Formungsvorrichtung (D; 155) für das Gemisch.

15. Vorrichtung nach Anspruch 14, dadurch gekennzeichnet, daß ein Teil einer Klärschlamm-Trocknungsvorrichtung (A1) durch einen Vakuumtrockner (19) gebildet ist.

16. Vorrichtung nach Anspruch 14 oder 15, dadurch gekennzeichnet, daß eine Kunststoff-Trocknungsvorrichtung (52) einen Kanal aufweist, durch den der Kunststoff-Abfall transportiert und heiße Trocknungsluft geblasen wird.

17. Vorrichtung nach einem der Ansprüche 14 bis 16, dadurch gekennzeichnet, daß der Schmelzvorrichtung (58) eine Zerkleinerungsvorrichtung (55) mit anschließender Förderschnecke (56) vorgeschaltet ist.

18. Vorrichtung nach einem der Ansprüche 14 bis 17, dadurch gekennzeichnet, daß die Mischvorrichtung (C) mit Ausgängen (49, 65) für das Pulver und die fließbare Masse des Konverters (42) bzw. der Schmelzvorrichtung (58) verbunden ist.

19. Vorrichtung nach Anspruch 18, dadurch gekennzeichnet, daß die Mischvorrichtung (C) am Ausgang (65) für die fließbare Hasse angeordnet ist.

20. Vorrichtung nach einem der Ansprüche 14 bis 17, dadurch gekennzeichnet, daß die Mischvorrichtung in die Schmelzvorrichtung (142) integriert ist.

21. Vorrichtung nach Anspruch 20, dadurch gekennzeichnet, daß die Schmelzvorrichtung (142) einen Eingang (150) für zerkleinerten Kunststoffabfall, einen Eingang (152) für das Pulver, ein Rührwerk (147) und einen Ausgang (156) für das Gemisch aufweist.

22. Vorrichtung nach einem der Ansprüche 14 bis 21, dadurch gekennzeichnet, daß die Mischvorrichtung (142) einen Zuführkanal (151a) für einen weiteren Abfallstoff aufweist.

23. Vorrichtung nach einem der Ansprüche 14 bis 22, dadurch gekennzeichnet, daß die Mischvorrichtung (C; 142) unmittelbar über der Formungsvorrichtung (D; 155) angeordnet ist.

24. Vorrichtung nach einem der Ansprüche 14 bis 23, dadurch gekennzeichnet, daß die Schmelzvorrichtung (142) mit einer Inertgas unter Druck zuführenden Anlage (159) verbunden ist.

25. Vorrichtung nach einem der Ansprüche 14 bis 24, dadurch gekennzeichnet, daß der Konverter (126) mit einer Vakuumanlage (133) verbunden ist.

26. Vorrichtung nach einem der Ansprüche 14 bis 25, dadurch gekennzeichnet, daß die Schmelzvorrichtung (142) mit einer Vakuumanlage (154) verbunden ist.

27. Vorrichtung nach einem der Ansprüche 14 bis 26, dadurch gekennzeichnet, daß der Schmelzvorrichtung (142) ein Pufferbehälter (141) für Kunststoffschnitzel vorgeschaltet ist.

28. Vorrichtung nach einem der Ansprüche 14 bis 27, dadurch gekennzeichnet, daß der Mischvorrichtung (142) ein Pufferbehälter (141) für Pulver vorgeschaltet ist.

29. Vorrichtung nach Anspruch 28, dadurch gekennzeichnet, daß der Pufferbehälter anstelle des Konverters vorgesehen ist.

30. Vorrichtung nach einem der Ansprüche 14 bis 29, dadurch gekennzeichnet, daß die Formungsvorrichtung (D) ein Extruder (70) ist.

31. Vorrichtung nach einem der Ansprüche 14 bis 29, dadurch gekennzeichnet, daß die Formungsvorrichtung (D) eine Gießform (72) aufweist.

32. Extrusions- oder Formteil, das im wesentlichen aus einem Gemisch von Abfallstoffen besteht, darunter Kunststoff und aus Klärschlamm gewonnenes Pulver.
